Europäisches Patentamt

European Patent Office

Office européen des brevets

(19)

(11) Publication number: **0 325 091**
**A1**

# EUROPEAN PATENT APPLICATION

(12)

(21) Application number: **88830017.5**

(22) Date of filing: **18.01.88**

(51) Int. Cl.⁴ **B60F 3/00 , E02F 9/06 ,**
**E02F 3/88 , E02F 3/92 ,**
**E02F 5/28**

(43) Date of publication of application:
**26.07.89 Bulletin 89/30**

(84) Designated Contracting States:
**AT BE CH DE ES FR GB GR LI LU NL SE**

(71) Applicant: **ITALMARE S.p.A.**
**Palazzo Italmare 50A Via delle Rose**
**I-80063 Piano di Sorrento NA(IT)**

(72) Inventor: **Coluccia, Carlo**
**13 Diramazione Vicoli Rota**
**I-80067 Sorrento NA(IT)**
Inventor: **Caggiano, Giustiniano**
**1 Via Leonardo Liparulo**
**I-80061 Massalubrense NA(IT)**

(74) Representative: **Tonon, Gilberto et al**
**c/o Società Italiana Brevetti Piazza Poli 42**
**I-00187 Roma(IT)**

(54) **A multipurpose amphibian vehicle.**

(57) A tracked amphibian vehicle with high mobility and provided with several apparatus, which are driven by the power and distrubition system on board, and are suitable to actuate specific functions in various operative fields.

FIG.1B

EP 0 325 091 A1

## A multipurpose amphibian vehicle.

The present invention relates to an amphibian vehicle having many uses in various working fields, such as environment protection, land reclamation, underwater search, civil protection, etc.

The vehicle according to the present invention has been designed with the aim of realising an amphibian vehicle having a weight/power ratio such as to allow its operation in particular conditions such as shoals, sandy, muddy, yielding soil, lagoon muds, as well as coast and inland waters.

The aim of the project consisted in the research for a vehicle having some specific characteristics of mobility, which could be a support for specialised systems and apparatus to be utilised for the several operative functions for which the vehicle has been conceived.

Along this line some basic uses have been fixed without excluding special equipments for satisfying specific needs.

The present invention will be better illustrated below in the description of a non-limiting example of embodiment of the same and with reference to the attached drawings, in which:
figures 1A and 1B are, respectively, a side elevation view and a longitudinal sectional view of the subject amphibian vehicle, and
figures 2 to 14 are schematic views of methods of use of the amphibian vehicle of figure 1, through the respective apparatus on board.

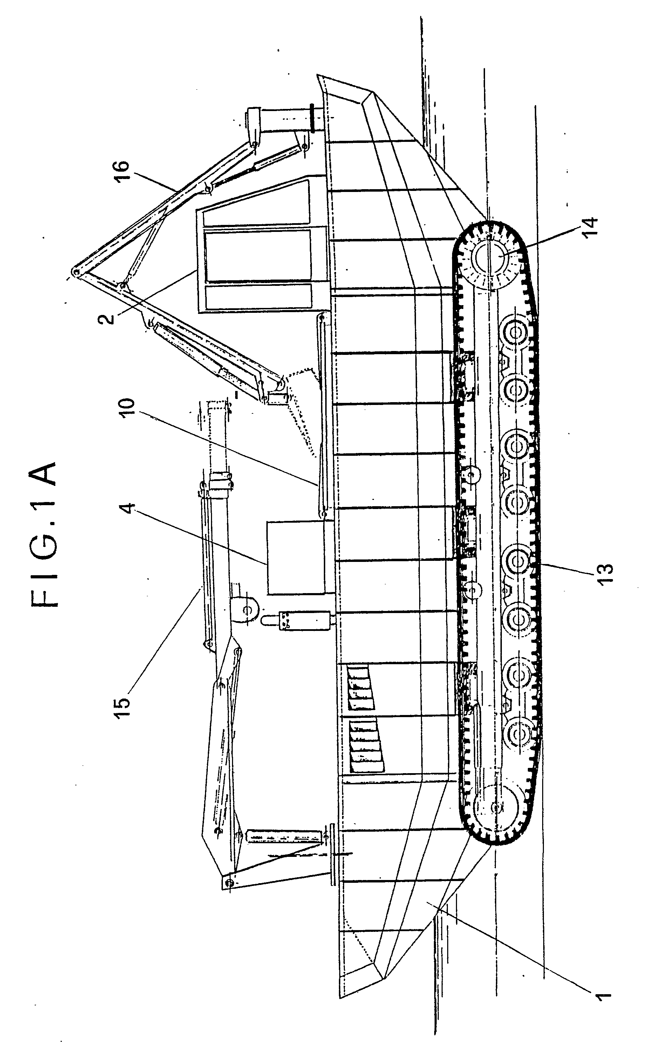

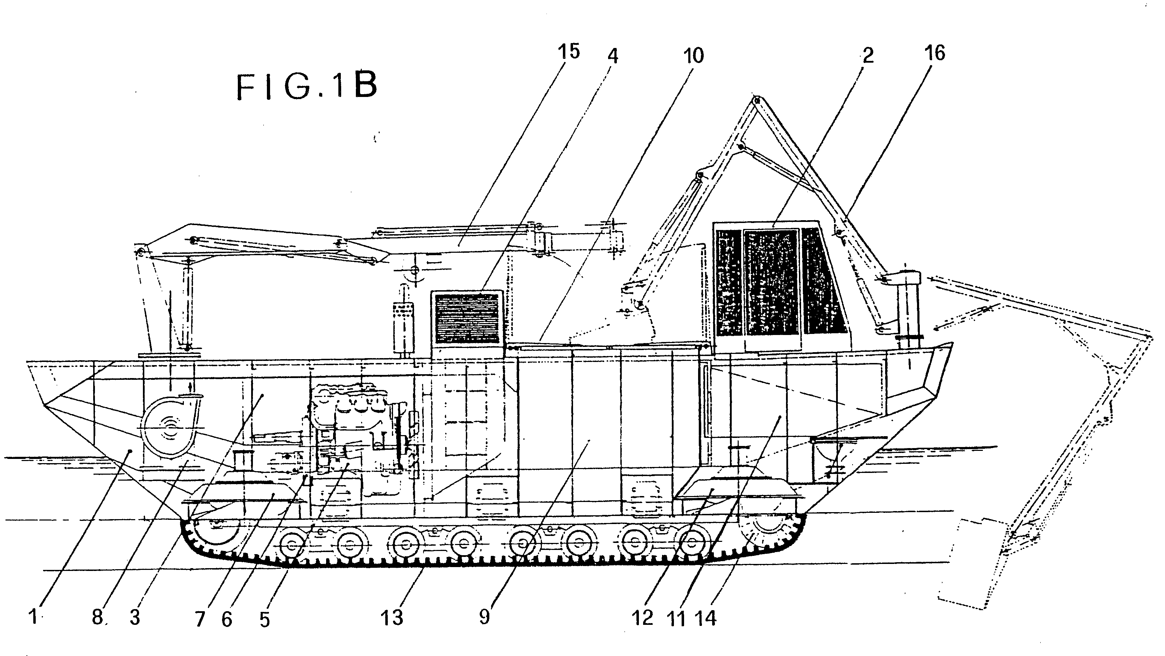

With reference to figures 1A and 1B, in 1 the metal hull in a lightweight magnesium and aluminum alloy of the amphibian vehicle of the present invention is shown.

The hull 1, of the type with a flat bottom, has a prism-like central body and two similarly shaped end parts, such as to have a low drag in water when moving in each of the two possible motion directions.

On one of these end parts of the hull 1, conventionally defined "front part" or "bow", the bridge 2 is located, where all the controls and instruments for the motion and stearing of the vehicle both on water and land, as well as the controls for the operation of the apparatus on board are arranged.

The interior of the vehicle, starting from the end part opposed to the one above mentioned, and defined "rear part" or "stern" is divided in: engine room 3 provided with a skylight 4, where there are located the main engine 5 constituted by a diesel cycle engine, the power take-off of which is connected with a group of oleodynamic pumps 6 for the transmission of motive power, the tanks for fuel and hydraulic oil, the service storage batteries, a first hydrodynamic propulsor 7, consisting of a water jet, driven by a motor connected to said group of oleodynamic pumps 6; a centrifugal pump 8 also connected to said group of oleodynamic pumps 6; a cargo hold 9 with the related hatch 10; quarter 11 with facilities, under the bridge 2, where a second hydrodynamic propulsor 12 is installed, similar to the one installed in the above mentioned engine room, connected to said group of oleodynamic pumps 6.

While the propulsion on water of the amphibian vehicle of the invention in both motion directions is obtained by means of said first and second water jets, for movements on land two tracks are provided, only one of which is shown and indicated in 13, installed underneath on respective sides of the hull 1, the driving wheels of which, of which only one is shown and indicated in 14, are driven by respective variable displacement motors connected to said group of oleodynamic pumps 6.

On the upper deck a service crane 15 is installed aft, while at the extremity of the bow, on respective sides two articulated arms are installed, only one of which is shown in figure 1 and indicated in 16.

The amphibian vehicle according to the present invention is finally provided, for movements on land, with parking lights, driving beams orientable by 360°, as well as tow hook, and for navigation it is provided with radar, echo sounder, compass and furthermore it has a VHF radio installed on board for communicating with ships and aircrafts.

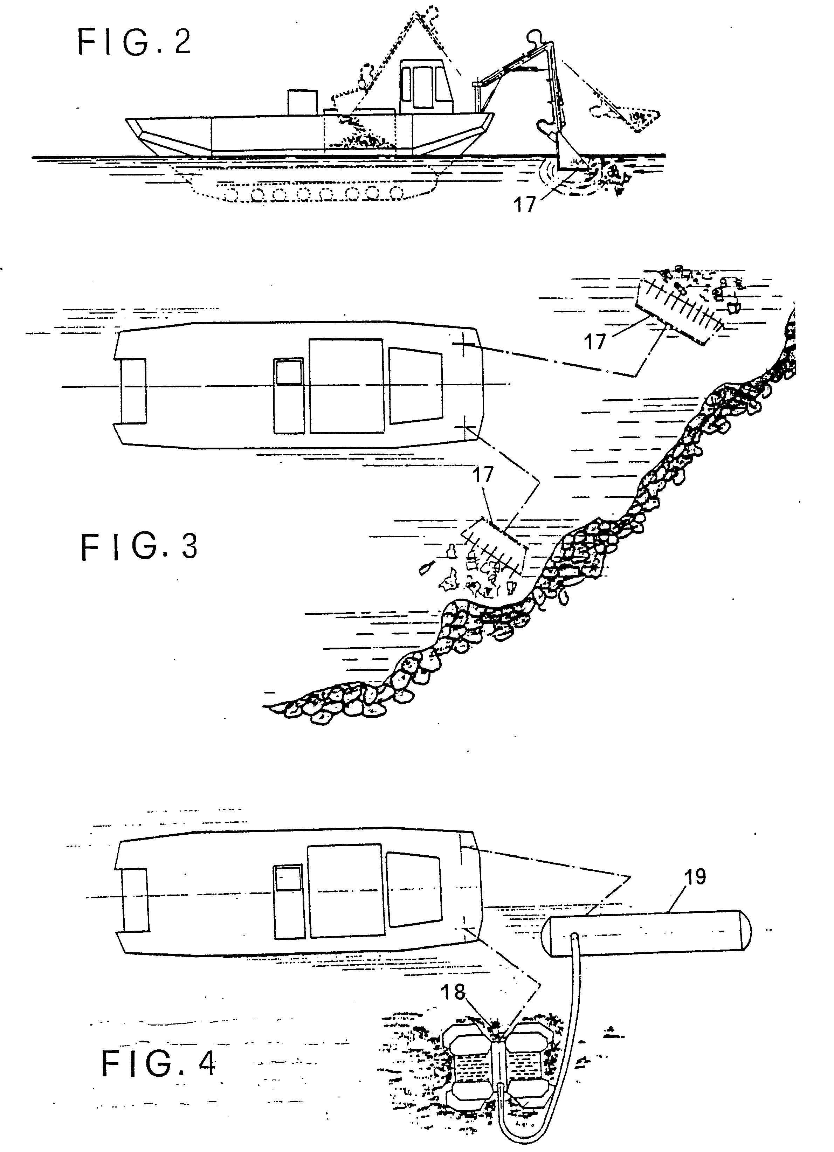

With reference to figures 2 to 14, in these there are illustrated schematically the main operative functions realizable with the apparatus permanently installed on the amphibian vehicle of the invention previously disclosed and with the apparatus transported by the vehicle itself and driven by the system on board.

In particular, the following operations may be performed with the amphibian vehicle acording to the invention thus devices and equipped:

Recovery of macropollution (figures 2 and 3)

The recovery of floating and half-submerged macropollution in coast waters (figure 2) and on the beach (figure 3) is performed by means of suitable aspirating buckets 17 mounted on respective articulated arms 16 connected to the centrifugal pump 8. The macropollution sucked by the buckets 17 and trapped in the same is subsequently discharged into the hold 9. Heavy and bulky material may be recovered by means of the service crane 15, provided with a winch, and, or with the use of fork buckets applied on the articulated arms 16. The arrangement of the aspirating buckets and, or of the fork buckets at the end of the articulated arms 16 allows to intervene in places hard to reach and narrow.

## Recovery of macropollution (figures 2 and 3)

The recovery of floating and half-submerged macropollution in coast waters (figure 2) and on the beach (figure 3) is performed by means of suitable aspirating buckets 17 mounted on respective articulated arms 16 connected to the centrifugal pump 8. The macropollution sucked by the buckets 17 and trapped in the same is subsequently discharged into the hold 9. Heavy and bulky material may be recovered by means of the service crane 15, provided with a winch, and, or with the use of fork buckets applied on the articulated arms 16. The arrangement of the aspirating buckets and, or of the fork buckets at the end of the articulated arms 16 allows to intervene in places hard to reach and narrow.

## Recovery of floating hydrocarbons and oils (figure 4)

This operation is performed with a separator 18 of the kind with multiple disks of differentiated diameter and supported by a float. The recovered oil is transferred by means of a positive-displacement pump to a storage tank 19, either floating or located on the vehicle.

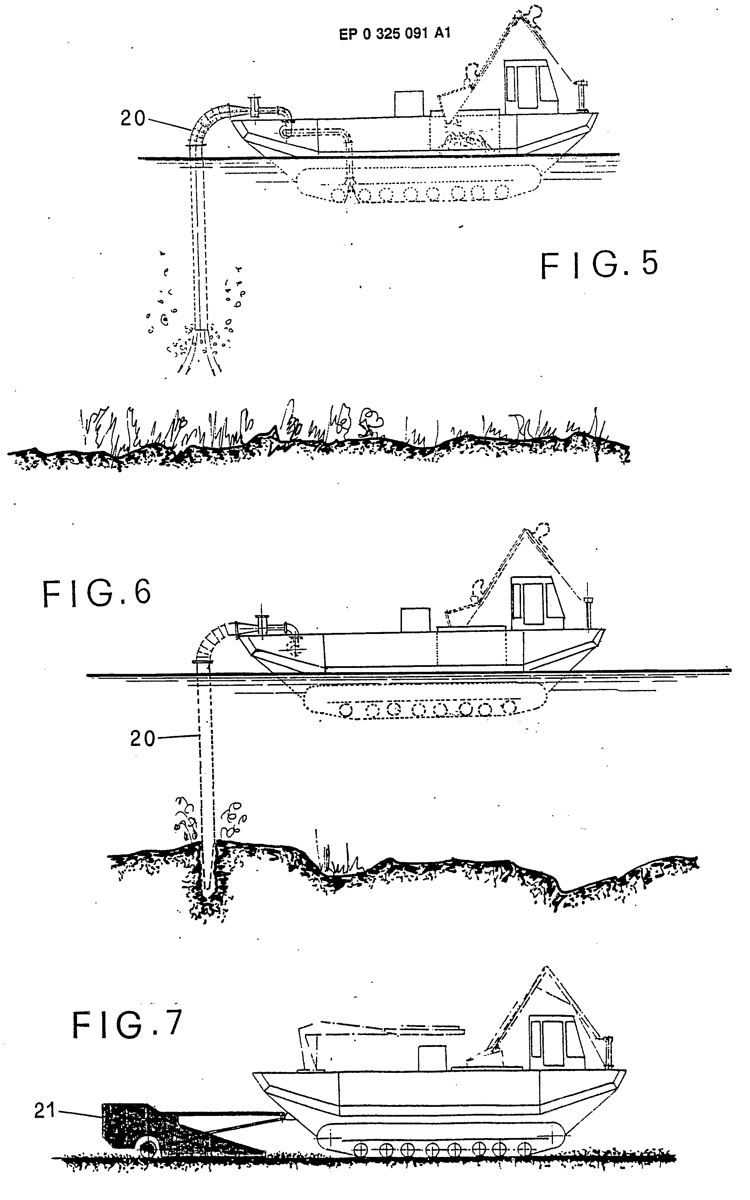

## Oxygenation of water pools (figures 5 and 6)

The operation has the purpose of enriching with oxygen those waters in which particular phenomena have created environmental situations such as to prevent the growth and development of fauna. The plant 20 allows to draw the water to be treated, sucking it by means of the centrifugal pump 8 and utilising it as a propelling fluid in an ejector of water-air, to mix it with a large quantity of atmospheric air in the outflow section and to send this mixture down to a considerable depth (figure 5).

With a particular equipment the mixture of water-air may be injected directly down to a certain depth (20 to 30 centimeters) on the bottom of the water pool, in particular for the preparation of places for aquaculture (figure 6).

## Cleaning of beaches (figure 7)

The vehicle of the invention may be utilised for the removal of foreign bodies deposited on beaches and for the reinstatement of a clean and levelled surface. The operation is performed with a rake machine 21 towed and feeded by the vehicle.

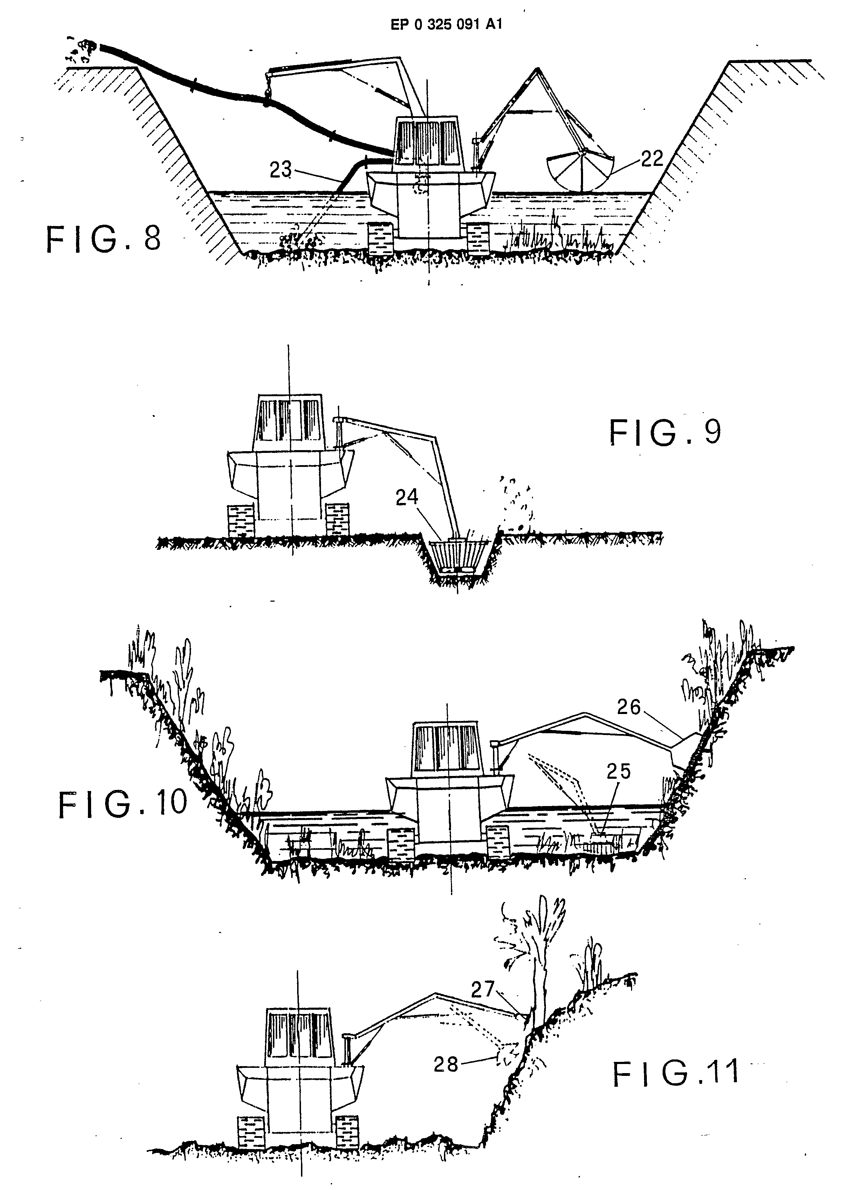

## Cleaning of basins, irrigation canals, open conduits (figures 8, 9, 10, 11)

Normally these are shallow water-ways, characterised by a low speed of the water flow, with areas of slowing down and stagnation. Many, of old construction, are realised in clayey material, liable to fractures and settlement, with a consequent obstruction of the water-way. The low speed of the water allows the deposit and accumulation of alluvial muds and consequently the occurrence of swamp vegetation, which slows down the downflow and, if not removed periodically, is such as to cause the blocking off the conduit and the consequent impossibility of use.

The question is therefore to perform a general operation of reclamation and thus to maintain active the water conduit or pool according to a programmed plan of maintenance.

The amphibian vehicle according to the present invention moves easily on the bottom of these canals, or floats thereon where the water depth is sufficient, and proceeds rapidly and effectively to perform the following operations:
- removal of mud with the orange peel bucket 22 (figure 8) which discharges into a hopper and from here a conveyor belt provides to discharge the material to a dump (truck, container, etc.); when mud submerged at a certain depth in water is involved, one proceeds with the aspiration of the same with a suction pipe 23 (figure 8) connected to the centrifugal pump 8. The removal of large quantities of mud and solid waste of a certain size allows to have, where possible, the secondary advantage of reconstructing with this material, even if temporarily, eroded banks and, or banks prone to settle (see figure 8);
- cleaning of ditches by means of a suitable mill 24 (see figure 9);
- elimination of vegetation by means of a mill 25 for cutting algae on shoals and by means of a hoe 26 for dikes and banks and like (figure 10);
- removal of bush by means of a circular saw 27 and settlement of slopes by means of a hydraulic rotative cutter 28 (see figure 11);

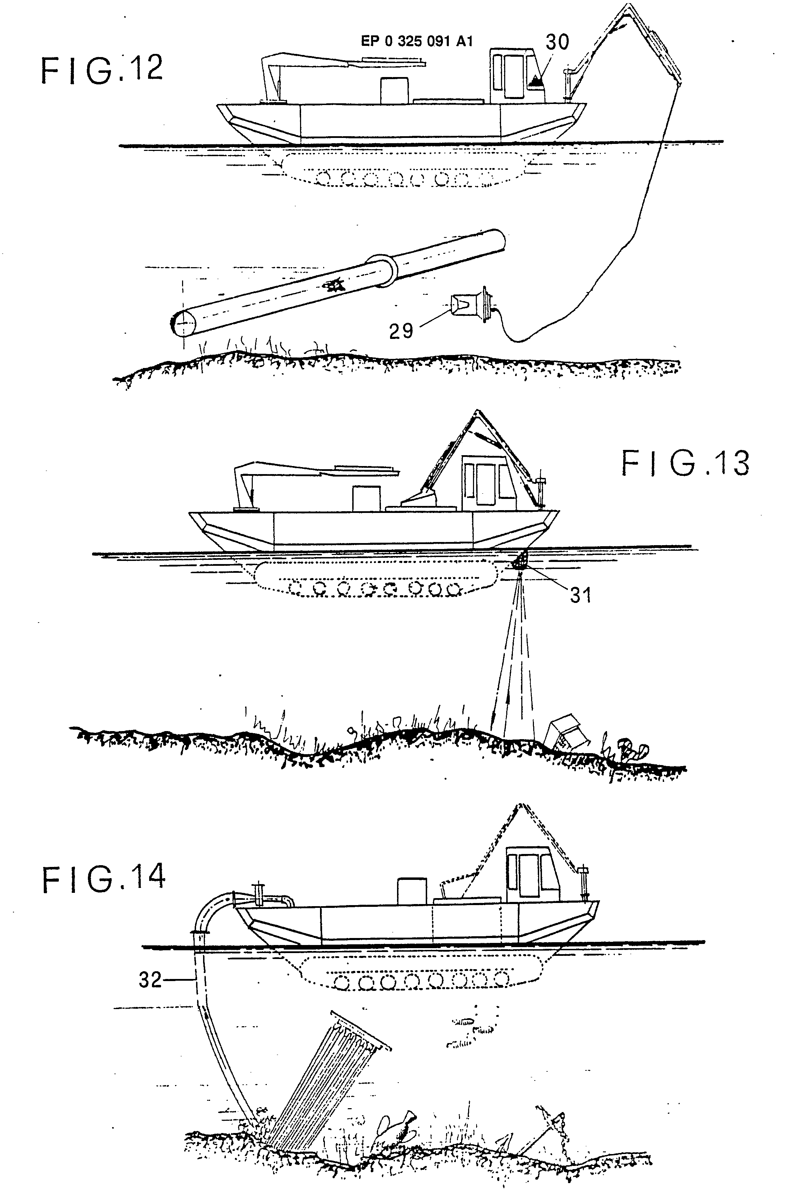

## Underwater searches and works (figures 12 and 13)

The present vehicle may be conveniently utilised in searches and underwater works in coast and inland waters, particularly where the absence of a harbours (however, the availability of an access from the sea) does not allow or renders very expensive the use of conventional support systems (pontoon and tugboat).

For this activity the vehicle of the invention is equipped with:
- a wire controlled underwater television camera 29, with a monitor 30 on the bridge 2, associated with a lighting system for inspections up to 6-8 meters under the surface (figure 12);
- an echo sounder 31 (sonar) with high selectivity, which allows to define with certain limits the contours of an object found at a specific depth (figure 13).

Underwater archaeology (figure 14)

This is a particular application of the possibilities described in the preceding paragraph. When an interesting place has been found either with the television camera or with the echo sounder, by means of the aspirating apparatus 32, operations of removal of sand/mud surrounding the object may be performed, under the control of the television camera until freeing it and rendering it available for slinging and lifting to the surface.

The economic advantage that characterizes this way of operating with respect to the traditional one with scuba divers is evident.

Reconstruction of sandy beaches for bathing eroded by water

This is a phenomenon recurring along the coasts, that may be redressed, although not always, by maritime works that modify the course of coast streams. With the possibility of aspirating sand from the sea bottom, the vehicle of the invention may redress particular situations with rather fast interventions, by discharging on the eroded beach considerable quantities of sand.

Civil protection

The vehicle of the invention, finally, is particularly apt for interventions, in matter of civil protection, in the event of natural disasters (for instance alluvions), when its unique capabilities of mobility on loose and muddy land emerge. In these situations the vehicle may be used for reaching places which are not accessible with normal vehicles; for the transport of personnel and materials; for clearing operations.

A fire-fighting system has also been studied, in which there is provided for: a motor-pump unit; a dispersion device (a light gun fire hydrant); a water tank; a tank for special liquid (foaming/fire retarding).

This module may be transported in areas which are impassable and difficult to reach with normal vehicles, even all-terrain vehicles, and is here made operative.

As already mentioned above, besides the above described apparatus being part of the normal equipment aboard the vehicle of the invention, for special purposes other apparatus may be installed, and in any case to be fed by the power system on board.

The present invention is not limited to the example of embodiment disclosed, but encompasses any variat of realization.

**Claims**

1. A multipurpose amphibian vehicle comprising: a flat-bottom hull; a double propulsion system comprising, for movements on land, two tracks arranged underneath on the respective sides of said hull and for movements of water at least two water jets located at the respective ends of said hull; centrifugal pump means; a main engine for feeding power to said tracks, to said water jets and to said centrifugal pump means as well as to the utilities, through a transmission system; a bridge; a service crane; at least one articulated arm; a set of apparatus carried by the vehicle and driven by the power producing and distributing system on board, with specific operative functions for environment protection, land reclamation, underwater search, underwater archaeology, civil protection and the like.

2. A vehicle according to claim 1, wherein said hull is divided internally into an engine room, a cargo hold, and quarters.

3. A vehicle according to claims 1 and 2, wherein said set of apparatus with specific operative functions includes: a cutter for cutting algae on shoals; a hoe for dikes and banks; a hydraulic rotative cutter for banks and slopes; a mower bar; a circular saw; a bank restorer; a ditch cleaning wheel; a sucking bucket; an orange peel bucket; a grid bucket; a hopper with shredder; a conveyor belt; an apparatus for the recovery of floating hydrocarbons; an apparatus for oxygenation of water; electronic apparatus for underwater searches; a printing echo sounder (computer sonar); a closed circuit television.

# FIG.1A

EP 0 325 091 A1

FIG.1B

FIG. 2

17

FIG. 3

17

17

FIG. 4

19

18

FIG.5

FIG.6

FIG.7

F I G . 8

F I G . 9

F I G . 10

F I G . 11

FIG.12

EP 0 325 091 A1

30

29

FIG.13

31

FIG.14

32

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | MACHINE DESIGN, vol. 40, no. 28, 12th May 1968, pages 20-24; R. ARONSON: "Moving the marines" * Figures on page 21; page 22, left-hand column, paragraph 2 - right-hand column, paragraph 2 * | 1 | B 60 F  3/00 E 02 F  9/06 E 02 F  3/88 E 02 F  3/92 E 02 F  5/28 |
| A | IDEM --- | 2 | |
| Y | EP-A-0 139 789  (HYDROWEGA HOLLAND BV) * Figures 1,3,5; page 2, lines 16-22; page 3, line 24 - page 4, line 11, lines 30-40 * | 1 | |
| A | --- | 3 | |
| A | SCHIFF UND HAFEN, vol. 38, no. 11, October 1986, pages 54-56, Hamburg, DE; D. CAEMMERER: "Ein Amphibienfahrzeug, nicht nur für das Wattenmeer" * Figures on page 54, right-hand column, page 55; pages 55,56, paragraphs "Wasserstrahlantrieb", "Diesel und Hydrostatik" * --- | 1 | |
| A | US-A-3 306 250  (A.H. PITCHFORD) * Figures 1,2; column 3, lines 43-50 * --- | 2 | TECHNICAL FIELDS SEARCHED (Int. Cl.4) B 60 F B 62 D E 02 F A 01 D |
| A | DE-A-2 301 838  (H.W. GEHLEN) * Figures 1,3,6,7; page 3, last paragraph - page 5, paragraph 1 * --- | 1,3 | |
| A | DE-A-2 741 920  (E. RHIGI) * Figure on page 8; page 5, line 25 - page 6, line 13 * ---                    -/- | 3 | |

The present search report has been drawn up for all claims

| Place of search | Date of completion of the search | Examiner |
|---|---|---|
| THE HAGUE | 16-09-1988 | CHLOSTA P. |

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | US-A-3 470 633 (R.M. SOEHNLEN)<br>* Figures 1,2; column 2, line 65 - column 3, line 21 *<br>--- | 3 | |
| A | DE-C- 847 989 (NEUE BAUMASCHINEN GmbH)<br>* Figure 3; page 8, lines 45-81 *<br>--- | 3 | |
| A | DE-A-1 634 013 (BACKERS & GILBERS)<br>* Figures 1-3,7; page 7, line 20 - page 8, paragraph 2; page 9, paragraph 2; page 11, paragraph 3 *<br>----- | 3 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 16-09-1988 | CHLOSTA P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P0401)